# EUROPEAN PATENT APPLICATION

(11) **EP 4 730 409 A1**
(43) Date of publication of application: **22.04.2026**
(21) Application number: 25204448.2
(22) Date of filing: 24.09.2025
(51) Int. Cl.: H01M 4/04, B30B 3/00, B30B 11/18

(54) **ROLL PRESS APPARATUS FOR MANUFACTURING ELECTRODE PLATES**

(30) Priority: 16.10.2024 KR 20240141472
(71) Applicant: SAMSUNG SDI CO., LTD., Yongin-si, Gyeonggi-do 17084 (KR)
(72) Inventor: KIM, Hyunchul, 17084 Yongin-si (KR); KIM, Yongsoo, 17084 Yongin-si (KR)
(74) Representative: Marks & Clerk LLP

(57) **Abstract**

A roll press apparatus (100) for manufacturing an electrode plate (11), the roll press apparatus including a frame portion (10), a first pressure roller (20) rotatably fixed on the frame portion to press a first surface of the electrode plate, the first pressure roller being configured to have a first expansion roller (23) protruding at each of opposite ends of the first pressure roller, a second pressure roller (30) rotatably fixed on the frame portion to pressurize a second surface facing the first surface of the electrode plate, the second pressure roller being configured to have a second expansion roller (33) protruding at each of opposite ends of the second pressure roller, and a driver (40) configured to provide a driving force to the first pressure roller and the second pressure roller

## Description

### BACKGROUND

### 1. Field

The present disclosure relates to a roll press apparatus for manufacturing electrode plates.

### 2. Description of the Related Art

In general, a roll press apparatus is an apparatus that processes a metal material by utilizing plasticity of a metal, and processes the metal material by passing it between two rotating rollers.

Meanwhile, the electrode plate to be manufactured includes a composite coating portion coated with a first thickness on a surface of a substrate, and an insulating coating portion coated on an edge of the substrate at an edge of the composite coating portion and having a second thickness that is different from the first thickness.

The above information disclosed in this Background section is for enhancement of understanding of the background of the present disclosure, and therefore, it may contain information that does not constitute a related (or prior) art.

### SUMMARY

Embodiments include a roll press apparatus for manufacturing an electrode plate, the roll press apparatus including a frame portion, a first pressure roller rotatably fixed on the frame portion to press a first surface of the electrode plate, the first pressure roller having a first expansion roller protruding at each of opposite ends of the first pressure roller, a second pressure roller rotatably fixed on the frame portion to pressurize a second surface facing the first surface of the electrode plate, the second pressure roller having a second expansion roller protruding at each of opposite ends of the second pressure roller, and a driver configured to provide a driving force to the first pressure roller and the second pressure roller.

The first pressure roller may include:
a first base roller fixed in the frame portion, wherein the first expansion roller is rotatably fixed in the frame portion and protrudes outwardly from the first base roller.

The first expansion roller may be a first multi-stage roller protruding from each of the opposite ends of the first base roller.

The first multi-stage roller may include a first roller having a first diameter, the first roller protruding from each of the opposite ends of the first base roller, and a second roller having a second diameter, the second roller protruding on each of opposite sides of the first roller.

The second pressure roller may include a second base roller fixed in the frame portion, and a second expansion roller at each of opposite ends of the second base roller, the second expansion roller being rotatably fixed in the frame portion protruding outwardly from the second base roller.

The second pressure roller may include a second base roller fixed in the frame portion, and wherein the second expansion roller is rotatably fixed in the frame portion and protrudes outwardly from the second base roller.

The second multi-stage roller may include a second roller having a first diameter, the second roller being configured to protrude from each of the opposite ends of the first base roller, and a third roller having a second diameter, the third roller being configured to protrude from each of opposite sides of the second roller.

The first expansion roller may be detachably connected to the first base roller.

A first insertion groove, to which the first expansion roller may be detachably coupled, is at each of opposite ends of the first base roller.

A first insertion portion may be in the first insertion groove and may protrude from each of opposite ends of the first expansion roller.

The second expansion roller may be detachably connected to the second base roller.

A second insertion groove, to which the second expansion roller may be detachably coupled, is at each of opposite ends of the second base roller.

A second insertion portion may be in the second insertion groove and protrude from each of opposite ends of the second expansion roller.

A tapered surface may be on a side surface of a first expansion roller.

A tapered surface may be on a side surface of a second expansion roller.

The driver may include a belt member connected to each of the first pressure roller and the second pressure roller, and a driving motor configured to provide a rotational driving force to the belt member.

At least some of the above and other features of the invention are set out in the claims.

### BRIEF DESCRIPTION OF THE DRAWINGS

Features will become apparent to those of ordinary skill in the art by describing in detail embodiments with reference to the attached drawings, in which:
FIG. 1 illustrates a schematic perspective view showing a roll press apparatus for manufacturing an electrode plate according to a first embodiment of the present disclosure;
FIG. 2 illustrates a side view schematically showing a state in which first and second pressure rollers are arranged with the electrode plate provided therebetween according to the first embodiment of the present disclosure;
FIG. 3 illustrates a schematic perspective view showing a first pressure roller according to the first embodiment of the present disclosure;
FIG. 4 illustrates a schematic perspective view showing a roll press apparatus for manufacturing an electrode plate according to a second embodiment of the present disclosure;
FIG. 5 illustrates a schematic perspective view showing the second pressure roller according to the second embodiment of the present disclosure;
FIG. 6 illustrates a schematic perspective view showing a roll press apparatus for manufacturing an electrode plate according to a third embodiment of the present disclosure;
FIG. 7 illustrates a schematic perspective view showing a first pressure roller according to the third embodiment of the present disclosure;
FIG. 8 illustrates an exploded perspective view showing the first pressure roller of FIG. 7; and
FIG. 9 illustrates a schematic exploded perspective view showing a second pressure roller according to the third embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As those of ordinary skill in the art would realize, the described embodiments may be modified in various different ways, all without departing from the scope of the present disclosure. The drawings and description are to be regarded as illustrative in nature and not restrictive.

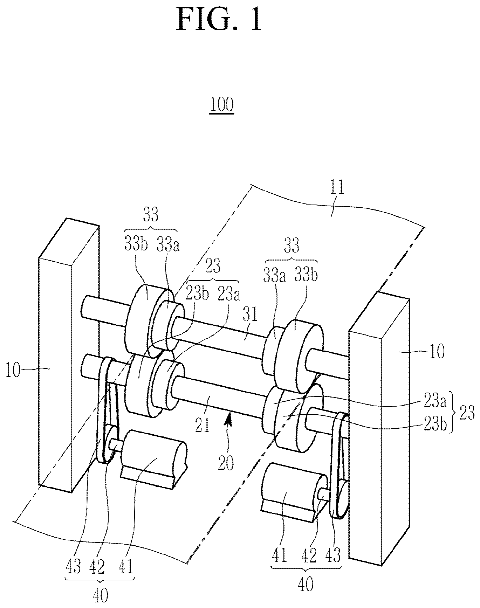

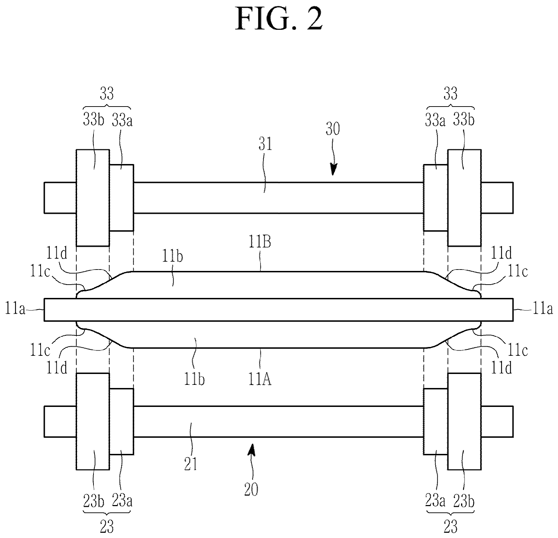

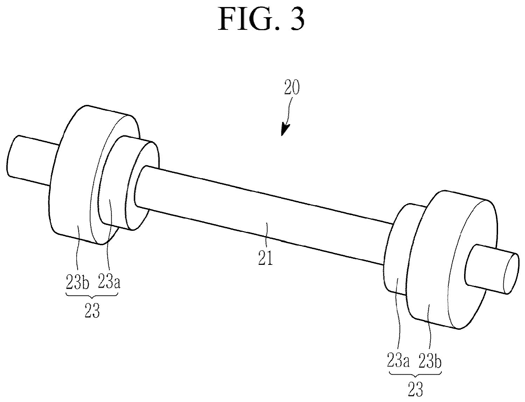

FIG. 1 illustrates a schematic perspective view showing a roll press apparatus for manufacturing an electrode plate according to a first embodiment of the present disclosure; FIG. 2 illustrates a side view schematically showing a state in which first and second pressure rollers are arranged with the electrode plate provided therebetween according to the first embodiment of the present disclosure; and FIG. 3 illustrates a schematic perspective view showing a first pressure roller according to the first embodiment of the present disclosure.

As illustrated in FIGS. 1 to 3, the roll press apparatus 100 for manufacturing an electrode plate 11 according to the first embodiment of the present disclosure may include a frame portion 10, a first pressure roller 20 that is rotatably installed (e.g., rotatably fixed or rotatable) on the frame portion 10 and which presses a first surface (e.g., a lower surface in the orientation shown) of the electrode plate 11 and includes first expansion roller 23 protruding at opposite ends (or end regions) of the first pressure roller 20, a second pressure roller 30 (see FIG. 2) that is rotatably installed (e.g., rotatably fixed) on the frame portion 10 and presses a second surface facing the first surface (e.g., a bottom surface in the orientation shown) of the electrode plate 11 (e.g., a top surface in the orientation show) and has a second expansion roller 33 protruding at each of opposite ends (or end regions) of the second pressure roller 30, and a driver 40 that provides a driving force to the first pressure roller 20, and optionally the second pressure roller 30.

The frame portion 10 may be installed on a bottom surface of a work space, and the first pressure roller 20 and the second pressure roller 30 may be installed on the frame portion 10 rotatably.

The frame portion 10 may be installed on the bottom surface of the work space with an installation space formed in which the second pressure roller 30 is rotatably installed on (e.g., over) the first pressure roller 20.

The first pressure roller 20 may be installed so as to be rotatably supported by the driving force of the driver 40, and may be installed so as to be rotatably supported by the driving force of the driver 40 while supporting a first surface 11A of the electrode plate 11.

The first pressure roller 20 may be installed with a long length in a width direction of the first surface 11A of the electrode plate 11, and may be installed to pressurize and support the first surface 11A of the electrode plate 11 while maintaining a set distance from the second pressure roller 30.

This first pressure roller 20 may be installed to provide a pressure force to stably pressurize and manufacture an edge portion where a composite coating portion 11b and an insulating coating portion 11c of the electrode plate 11 are formed during a manufacturing process of the electrode plate 11.

To be more specific, the first pressure roller 20 may include a first base roller 21 having a first diameter installed on the frame portion 10, and a first expansion roller 23 having a second diameter installed on each of opposite ends of the first base roller 21 and rotatably installed on the frame portion 10.

The first base roller 21 may be formed with a length extending in a width direction of the electrode plate 11 (in the orientation shown), and may be installed to press-mold the composite coating portion 11b at a position of the first surface 11A of the electrode plate 11. See Figure 2.

That is, the electrode plate 11 of the present embodiment may include a substrate 11a, the composite coating portion 11b coated with a first thickness on a surface of the substrate 11a, and the insulating coating portion 11c coated on an edge portion of the substrate 11a at an edge of the composite coating portion 11b. Herein, an inclined surface 11d may be formed between the composite coating portion 11b and the insulating coating portion 11c.

The first base roller 21 may press the composite coating portion 11b coated on the first surface 11A of the substrate 11a of the electrode plate 11. To this end, the first base roller 21 may be installed with a length corresponding to a length of the composite coating portion 11b applied on the electrode plate 11.

The first expansion roller 23 may be installed at each of opposite ends of the first base roller 21.

The first expansion roller 23 may protrude from each of the opposite ends of the first base roller 21, and may protrude with a diameter that is larger than a diameter of the first base roller 21.

In this way, the first expansion roller 23 may protrude from the opposite ends of the first base roller 21 to properly pressurize and form the insulating coating portion 11c and the inclined surface 11d attached to the edge of the substrate 11a of the electrode plate 11.

The first expansion roller 23 may serve as a first multi-stage roller that protrudes in multiple stages from each of the opposite ends of the first base roller 21. Hereinafter, a same reference number may be used for the first expansion roller and the first multi-stage roller.

The first multi-stage roller 23 may include a first roller 23a having a first diameter protruding from each of the opposite ends of the first base roller 21, and a second roller 23b having a second diameter protruding from each of the opposite sides of the first roller 23a.

The first roller 23a may protrude from each of the opposite ends of the first base roller 21, and may protrude with the first diameter that is larger than that of the first base roller 21. The first roller 23a may pressurize and form an inclined surface 11d formed between the composite coating portion 11b and the insulating coating portion 11c on the electrode plate 11.

That is, the inclined surface 11d of the electrode plate may not be press-molded by the first base roller 21, which may be linear-shaped, so the inclined surface 11d of the electrode plate 11 to be manufactured may be stably press-molded using the first roller 23a with a larger diameter than that of the first base roller 21.

The second roller 23b may protrude from opposite sides of the first roller 23a, and may protrude with a second diameter that is larger than the diameter of the first roller 23a.

The second roller 23b may protrude from each of the opposite sides of the first roller 23a to press-mold a portion of the insulating coating portion 11c on the electrode plate 11.

That is, the insulating coating portion 11c of the electrode plate 11 may be coated with a relatively minimum thickness on the edge portion of the electrode plate 11, so the insulating coating portion 11c may be stably pressurized and formed using the second roller 23b having a relatively large diameter.

Meanwhile, the second pressure roller 30 may be installed at a position facing the first pressure roller 20 with the electrode plate 11 therebetween, so as to pressurize and form a second surface 11B of the electrode plate 11.

This second pressure roller 30 may be installed to provide a pressure force to stably pressurize and manufacture an edge portion where a composite coating portion 11b and an insulating coating portion 11c of the electrode plate 11 are formed during a manufacturing process of the electrode plate 11.

To be more specific, the second pressure roller 30 may include a second base roller 31 installed on the frame portion 10, and a second expansion roller 33 installed at each of opposite ends of the second base roller 31, which are rotatably installed on the frame portion 10 and protrude outward from the second base roller 31.

The second base roller 31 may be formed with a length extending in the width direction of the electrode plate 11, and may be installed to press-mold the insulating coating portion 11c at a position of the second surface 11B opposite the first surface 11A of the electrode plate 11.

The second base roller 31 may be installed to pressurize and form the second surface 11B of the electrode plate 11 in a same or similar shape as that of the first base roller 21 described above.

The second base roller 31 may press the composite coating portion 11b coated on the second surface 11B of the substrate 11a of the electrode plate 11. To this end, the second base roller 31 may be installed with a length corresponding to a length of the composite coating portion 11b applied on the electrode plate 11.

The second expansion roller 33 may be installed at each of opposite ends of the second base roller 31.

The second expansion roller 33 may protrude from each of the opposite ends of the second base roller 31, and may protrude with a diameter that is larger than a diameter of the second base roller 31.

In this way, the second expansion roller 33 may protrude from each of the opposite ends of the second base roller 31 to properly pressurize and form the insulating coating portion 11c and the inclined surface 11d attached to the edge of the substrate 11a of the electrode plate 11.

The second expansion roller 33 may serve as a second multi-stage roller that protrudes in multiple stages from each of the opposite ends of the second base roller 31. Hereinafter, a same reference number may be used for the second expansion roller and the second multi-stage roller.

The first multi-stage roller 33 may include a roller 33a having a first diameter protruding from each of the opposite ends of the second base roller 31, and a roller 33b having a second diameter protruding from opposite sides of the roller 33a.

The roller 33a may protrude from each of opposite ends of the second base roller 31, and may protrude with the first diameter that is larger than that of the second base roller 31. The roller 33a may be formed with the first diameter that is a same diameter as or similar to the first roller 23a.

The roller 33a may pressurize and form an inclined surface 11d formed between the composite coating portion 11b and the insulating coating portion 11c on a second surface 11B the electrode plate 11.

The roller 33b may protrude from each of the opposite sides of the roller 33a, and may protrude with a second diameter that is larger than the diameter of the roller 33a. The roller 33b may be formed with a second diameter having a same diameter as or similar to that of the second roller 23b.

Meanwhile, the driver 40 may be installed to provide a rotational driving force to the first pressure roller 20 and the second pressure roller 30 (in an example, a driver 40 may be provided for each of the first pressure roller 20 and the second pressure roller 30, or a common driver may be provided for both, the reference to the driver 40 encompassing both).

To be more specific, the driver 40 may include a driving motor 41 that provides a rotational driving force, and a belt member 43 connected to a rotational shaft 42 of the driving motor 41 and the first pressure roller 20. A further belt member (not shown) or some other linkage, may also be provided, connected to, for example, the rotational shaft of the second pressure roller 30, as an example.

The driving motor 41 may be installed inside the frame portion 10 or outside the frame portion 10, and may be installed to be driven manually or remotely according to manipulation control of a manipulator. There may be more than one motor and belt member for each rotational shaft or pressure roller.

The rotational driving force of the driving motor(s) 41 may be transmitted to the first pressure roller 20 and second pressure roller 30 by the belt member(s) 43, so the first pressure roller 20 and second pressure roller 30 may be properly rotated, thereby enabling smooth manufacturing of the composite coating portion 11b and the insulating coating portion 11c of the electrode plate 11.

As described above, the first pressure roller 20 and the second pressure roller 30 may be positioned on opposite sides with the electrode plate 11 therebetween, so that appropriate pressure forming of the composite coating portion 11b and the insulating coating portion 11c of the electrode plate 11 is possible.

That is, the first expansion roller 23 and the second expansion roller 33 may each be relatively-large diameter and protruded from each of opposite ends of the first pressure roller 20 and second pressure roller 30, respectively, so appropriate pressure molding of the composite coating portion 11b and the insulating coating portion 11c coated on the first surface 11A and second surface 11B of the substrate 11a constituting the electrode plate 11, and the inclined surface 11d between the composite coating portion 11b and the insulating coating portion 11c, etc., may be possible, thereby improving manufacturing quality.

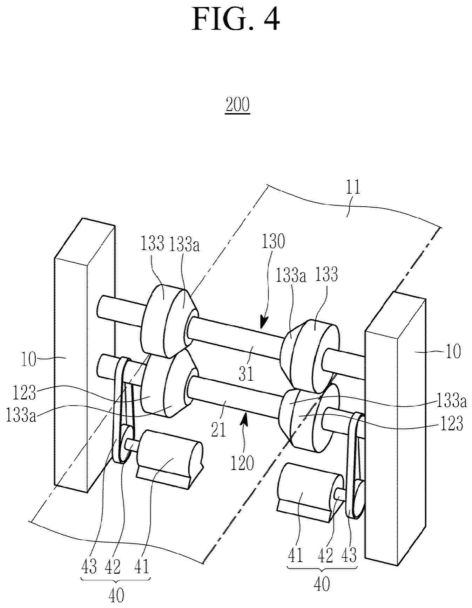

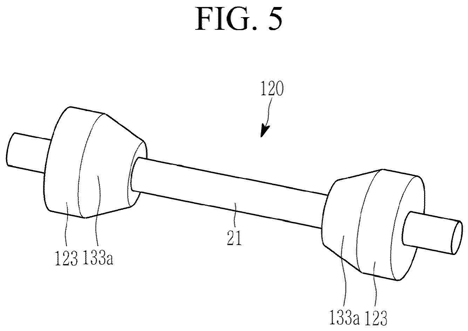

FIG. 4 illustrates a schematic perspective view showing a roll press apparatus for manufacturing an electrode plate according to a second embodiment of the present disclosure; and FIG. 5 illustrates a schematic perspective view showing the second pressure roller according to the second embodiment of the present disclosure. The same reference numerals as those of FIG. 1 to FIG. 3 denote the same or similar members having the same or similar functions. A detailed description of the same reference numerals will be omitted hereinafter.

As shown in FIGS. 4 and 5, a tapered surface 133a may be formed between the first expansion roller 123 and the first base roller 21 in the first pressure roller 120 of the roll press apparatus 200 for manufacturing an electrode plate according to the second embodiment of the present disclosure.

In addition, the tapered surface 133a may also be formed between the second expansion roller 133 and the second base roller 31 in the second pressure roller 130.

The aforementioned tapered surface 133a may press the inclined surface 11d formed between the composite coating portion 11b and the insulating coating portion 11c of the electrode plate 11, thereby enabling stable pressurization molding of the electrode plate 11.

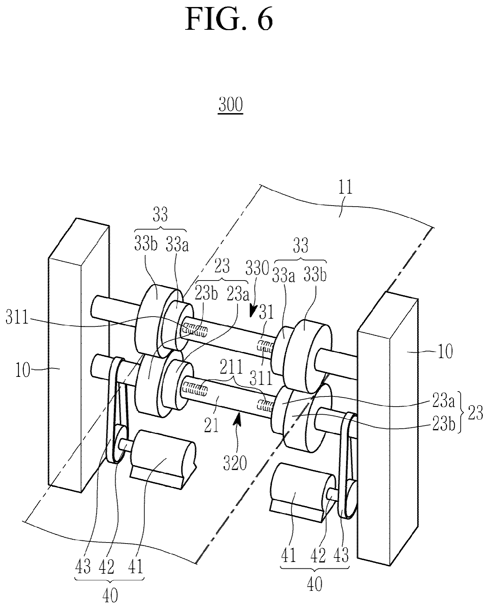

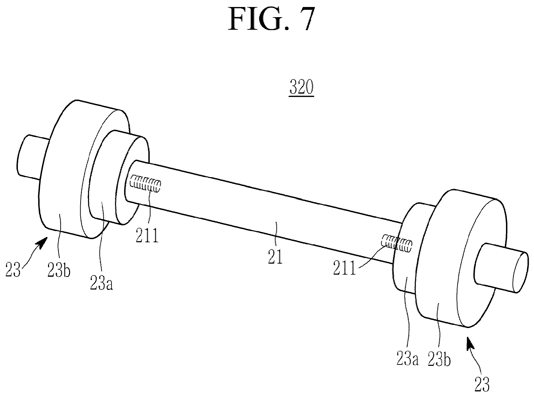

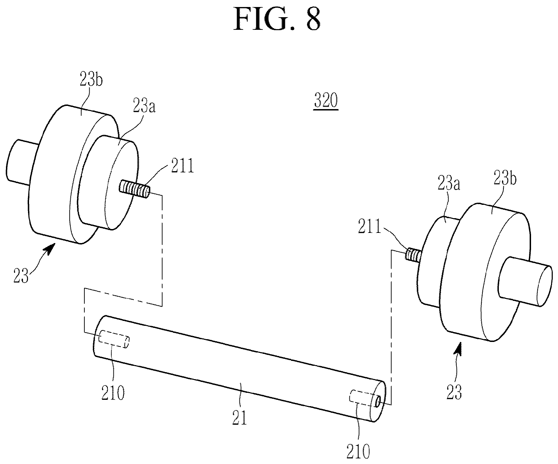

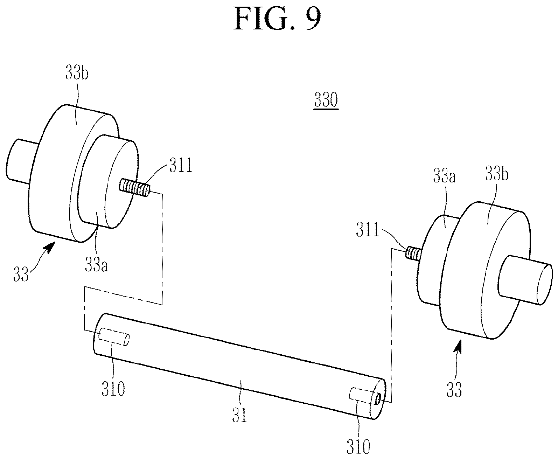

FIG. 6 illustrates a schematic perspective view showing a roll press apparatus for manufacturing an electrode plate according to a third embodiment of the present disclosure; FIG. 7 illustrates a schematic perspective view showing a first pressure roller according to the third embodiment of the present disclosure; FIG. 8 illustrates an exploded perspective view showing the first pressure roller of FIG. 7; and FIG. 9 illustrates a schematic exploded perspective view showing a second pressure roller according to the third embodiment of the present disclosure. The same reference numerals as those of FIG. 1 to FIG. 5 denote the same or similar members having the same or similar functions. A detailed description of the same reference numerals will be omitted hereinafter.

As shown in FIGS. 6 to 9, a first expansion roller 23 of a first pressure roller 320 of the roll press apparatus 300 for manufacturing an electrode plate according to the third embodiment of the present disclosure may be detachably coupled to the first base roller 21.

In this way, the first expansion roller 23 may be detachably connected to the first base roller 21 so that the first expansion roller 23 may be appropriately replaced according to a change in the electrode plate 11.

To this end, a first insertion groove (or hole) 210 (see FIG. 8) into which the first expansion roller 23 is detachably coupled may be formed at each of opposite ends of the first base roller 21.

Additionally, a first insertion portion 211 that is inserted into the first insertion groove 210 may be protruded at opposite ends of each of the first expansion roller 23 (e.g., the first insertion portion 211 may protrude inwardly toward the first base roller 21). This first insertion portion 211 may be a first fixed bar that is fixed while inserted into the first insertion groove 210. Hereinafter, a same reference number may be used for the first insertion portion and the first fixed bar.

A first screw thread may be formed on an inner wall surface of the first insertion groove 210, and a second screw thread may be formed on an outer surface of the first insertion portion 211.

Accordingly, the first insertion portion 211 may be screw-connected while being inserted into an inside of the first insertion groove 210, so the first expansion roller 23 may be detachably connected to the first base roller 21.

Meanwhile, a second expansion roller 33 of a second pressure roller 330 may be detachably connected to the second base roller 31.

In this way, the second expansion roller 33 may be detachably connected to the second base roller 31 so that the second expansion roller 33 may be appropriately replaced according to a change in the electrode plate 11.

To this end, a second insertion groove 310 into which the second expansion roller 33 is detachably coupled may be formed at each of opposite ends of the second base roller 31.

Additionally, a second insertion portion 311 that is inserted into the second insertion groove 310 may be protruded at opposite ends of the second expansion roller 33 (e.g., the second insertion portion 311 may protrude inwardly toward the second base roller 31). This second insertion portion 311 may be a second fixed bar that is fixed while inserted into the second insertion groove 310. Hereinafter, a same reference number may be used for the second insertion portion and the second fixed bar.

A first screw thread may be formed on an inner wall surface of the second insertion groove 310, and a second screw thread may be formed on an outer surface of the second insertion portion 311.

A conventional roll press apparatus uses a hydraulic press to apply a force and uses large rolls. When electrode plates are manufactured using the conventional roll press apparatus, there is a problem in that waves, distortion or breakage of the electrode plates occur during the manufacturing process because thicknesses of the composite coating portion and the insulating coating portion are different from each other.

An embodiment of the present disclosure provides a roll press apparatus for manufacturing an electrode plate in which the electrode plate is not distorted or broken even when thicknesses of a composite coating portion and an insulating coating portion of the electrode plate are different.

According to an embodiment of the present disclosure, each of opposite ends of the pressing roller for pressing the electrode plate may have an expansion roller (relatively large-diameter) protruding, making it possible to appropriately press mold the composite coating portion and the insulating coating portion of the substrate constituting the electrode plate, thereby improving a manufacturing quality of the electrode plate.

While this disclosure has been described in connection with what is presently considered to be practical embodiments, it is to be understood that the disclosure is intended to cover various modifications and equivalent arrangements included within the scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A roll press apparatus for manufacturing an electrode plate, the roll press apparatus comprising:
a frame portion;
a first pressure roller rotatably fixed on the frame portion to press a first surface of the electrode plate, the first pressure roller having a first expansion roller protruding at each of opposite ends of the first pressure roller;
a second pressure roller rotatably fixed on the frame portion to pressurize a second surface facing the first surface of the electrode plate, the second pressure roller having a second expansion roller protruding at each of opposite ends of the second pressure roller; and
a driver configured to provide a driving force to the first pressure roller and the second pressure roller.

2. The roll press apparatus as claimed in claim 1, wherein the first pressure roller includes:
a first base roller fixed in the frame portion, wherein
the first expansion roller is rotatably fixed in the frame portion and protrudes outwardly from the first base roller.

3. The roll press apparatus as claimed in claim 2, wherein the first expansion roller is a first multi-stage roller protruding from each of the opposite ends of the first base roller.

4. The roll press apparatus as claimed in claim 3, wherein the first multi-stage roller includes:
a first roller having a first diameter, the first roller protruding from each of the opposite ends of the first base roller; and
a second roller having a second diameter, the second roller protruding on each of opposite sides of the first roller.

5. The roll press apparatus as claimed in any one of the preceding claims, wherein the second pressure roller includes:
a second base roller fixed in the frame portion, and
wherein the second expansion roller is rotatably fixed in the frame portion and protrudes outwardly from the second base roller.

6. The roll press apparatus as claimed in claim 5, wherein the second expansion roller is a second multi-stage roller protruding from each of the opposite ends of the second base roller.

7. The roll press apparatus as claimed in claim 6, wherein the second multi-stage roller includes:
a third roller having the first diameter, the third roller being configured to protrude from each of the opposite ends of the second base roller; and
a fourth roller having the second diameter, the fourth roller being configured to protrude from each of opposite sides of the third roller.

8. The roll press apparatus as claimed in any one of the preceding claims, when dependent upon claim 2, wherein the first expansion roller is detachably connected to the first base roller.

9. The roll press apparatus as claimed in claim 8, wherein a first insertion groove, to which the first expansion roller is detachably coupled, is at each of opposite ends of the first base roller.

10. The roll press apparatus as claimed in claim 9, wherein a first insertion portion is in the first insertion groove and protrudes from each of opposite ends of the first expansion roller.

11. The roll press apparatus as claimed in any one of the preceding claims, when dependent upon claim 5, wherein the second expansion roller is detachably connected to the second base roller.

12. The roll press apparatus as claimed in claim 11, wherein a second insertion groove, to which the second expansion roller is detachably coupled, is at each of opposite ends of the second base roller.

13. The roll press apparatus as claimed in claim 12, wherein a second insertion portion is in the second insertion groove and protrudes from each of opposite ends of the second expansion roller.

14. The roll press apparatus as claimed in any one of the preceding claims, wherein a tapered surface is on a side surface of a first expansion roller, and optionally wherein a tapered surface is on a side surface of a second expansion roller.

15. The roll press apparatus as claimed in any one of the preceding claims, wherein the driver includes:
a belt member connected to each of the first pressure roller and the second pressure roller; and
a driving motor configured to provide a rotational driving force to the belt member.
